Europäisches Patentamt

European Patent Office

Office européen des brevets

(11) Publication number: **0 180 197**
A2

# EUROPEAN PATENT APPLICATION

(21) Application number: **85113746.3**

(22) Date of filing: **29.10.85**

(51) Int. Cl.⁴: **C 02 F 3/12, C 02 F 1/24**

(30) Priority: **29.10.84 US 665756**

(43) Date of publication of application: **07.05.86**
Bulletin 86/19

(84) Designated Contracting States: **AT BE CH DE FR IT LI NL SE**

(71) Applicant: **VANDERBILT UNIVERSITY, Nashville Tennessee 37240 (US)**

(72) Inventor: **Eckenfelder, W. Wesley, Jr., 153 Valley Forge, Nashville Tennessee 37205 (US)**

(74) Representative: **Patentanwälte Grünecker, Kinkeldey, Stockmair & Partner, Maximilianstrasse 58, D-8000 München 22 (DE)**

(54) **Wastewater treatment process.**

(57) High BOD clarified wastewater is treated in a contactor with activated sludge for rapid BOD absorption without appreciable metabolism of the BOD. Shortly thereafter the sludge is separated from the effluent of reduced BOD. The sludge is aerated to restore its BOD absorption capacity and recycled to the contactor for treatment of incoming wastewater.

WASTEWATER TREATMENT PROCESS

FIELD OF INVENTION,
BACKGROUND AND PRIOR ART

The field of the invention is the treatment of
wastewater with activated sludge to reduce the BOD content.
In particular, the process of this invention is
concerned with the treatment of wastewaters containing
high soluble BOD.

Activated sludge processes for treatment of
both sewage and industrial wastewater are well known.
However, the treatment of wastewaters containing high
soluble BOD and low particulate matter is a distinct
process area from the treatment of sewage, which is
typically a high solids low soluble BOD substrate.
Sewage usually contains less than 50 mg/l of soluble
BOD, while industrial wastewaters contain soluble BOD
of the order of 250 to 1,000 mg/l and less than 200 mg/l
particulate matter.

It has been recognized for many years that
activated sludge is capable of removing both soluble
and fine particulate BOD from sewage or wastewater prior
to the metabolizing of the BOD. Storage mechanisms are
involved which to this date have not been fully explained.
These mechanisms probably involve absorption, adsorption, and/or
cellular storage functions. With reference to initial
storage of soluble organics when activated sludge is
contacted with wastewater, it is believed that a primary
mechanism is one of absorption of the soluble organic
substances into the cells of the activated sludge microorganisms. Porges et al presented an analysis of this phenomena in <u>In The Tenth Proceedings Of The Industrial Waste Conference</u>, Purdue University, 1955, pp 135-146. They concluded that the removal of BOD by active sludge consists of at least three distinct processes: oxidation, synthesis, and storage. While all processes can occur simultaneously, the storage mechanism can provide a rapid initial rate of BOD absorption. After being absorbed the organic matter is metabolized, either oxidized to carbon dioxide and water, or synthesized to form new cellular material.

In sewage treatment, contactors have been employed for the initial mixing of the activated sludge and the sewage. Relatively short mixing times are employed, and the resulting mixture is passed to tanks or holding basins for completing of the activated sludge treatment. However, there has been a recognized need or improvement in treatment of high soluble BOD wastewaters which require large and expensive plants to reduce the BOD to an acceptable level.

SUMMARY OF INVENTION

The continuous process of this invention provides a means for the treatment of high soluble .D wastewaters to achieve a rapid removal of the BOD by storage and subsequent metabolism. Large holding tanks or basins are not required as in the standard activated sludge processes. The BOD is removed rapidly from the wastewater in a small biosorption contactor, and immediately thereafter the sludge containing the absorbed BOD is separated from the wastewater.

The process utilizes a recycle circuit for the activated sludge, including in sequence a biosorption contactor, a solid/liquid separator, and a sludge regenerator. After removal from the wastewater in the solids-liquid separator, the sludge containing the absorbed but unmetabolized organic material is passed to the sludge regenerator. In that unit, the sludge is subjected to oxidative treatment. The contacting of the sludge with oxygen is continued until substantially all of the absorbed BOD has been metabolized. This step is important in restoring the BOD removal capacity of the sludge. The regenerated sludge biomass is then recycled to the biosorption contactor for the initial contacting with the incoming wastewater. Soluble BOD absorption efficiencies of the order of 50 to 80% can be obtained provided that a sufficiently high ratio of sludge to soluble organics is maintained in the biosorption contactor. As the biomass increases in volume due to the synthesis reaction and growth of the microorganisms, excess sludge is removed from the recycle circuit.

The process provides the advantages of higher soluble BOD removal rates, smaller treatment unit volumes, and decreased oxygen utilization. In one embodiment, a dissolved air flotation separator is employed for the solids/liquid separation. Depending on the mode of operation this can provide the advantage of increasing the temperature of the separated sludge and thereby promoting the sludge regeneration reactions.

THE DRAWING

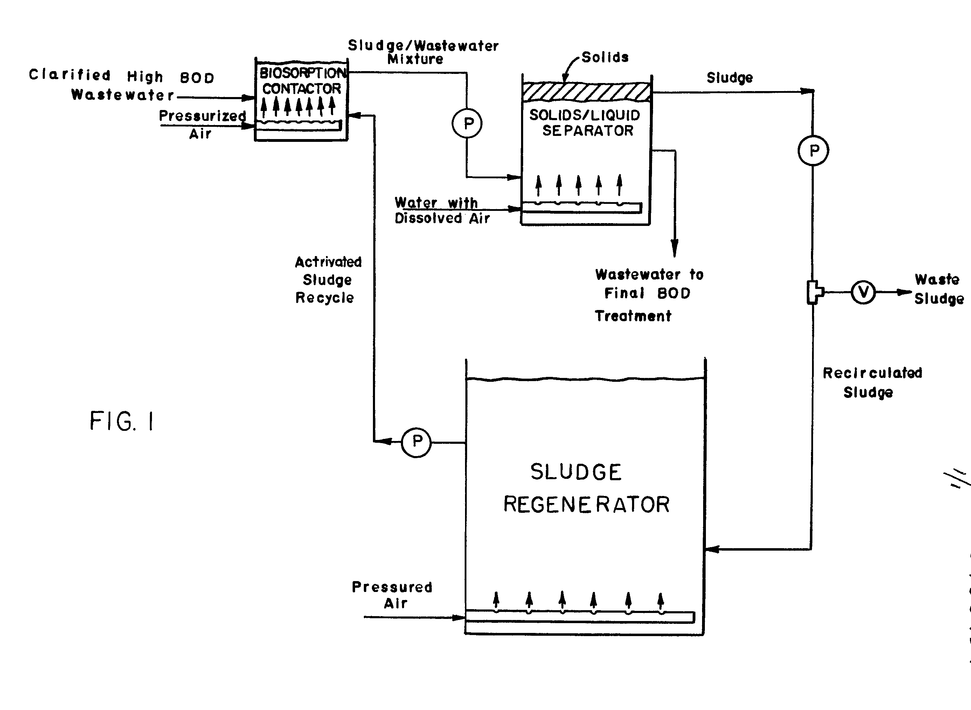

In the accompanying drawings, FIG. 1 is a diagrammatic flow sheet of a representative embodiment of the wastewater treatment process of this invention.

-3-

## DETAILED DESCRIPTION

The process of this invention is adapted for treatment of a wide variety of wastewaters. For example, the process may be applied to the treatment of pharmaceutical, diary, pulp, paper, and cereal wastewaters. such wastewaters are characterized by a content of soluble biodegradable organic substances. Typically, such wastewaters will contain at least 250 milligrams (mg) or more of soluble BOD per liter (l). Wastewaters containing from 500 to 1000 mg/l of soluble BOD can be treated, and even higher BOD wastewaters. In fact, the process has particular advantage with respect to maximizing BOD reduction efficiency with minimized plant design and operating costs. Where such wastewaters contain substantial amounts of particulate matter, they should be subjected to preliminary clarification procedures. The clarified wastewater is then subjected to treatment in the process of the present invention. Usually, therefore, the wastewaters will contain only very fine particulate BOD substances, and, typically, less than 200 mg/l of particulate BOD matter. These substrates are therefore quite different in character than those encountered in the treatment of sewage.

The activated sludge used in the process consists of flocculated bacteria, protozoa, and filamentous bacteria. The primary removal by absorption is due to the flocculated bacteria. The active portion of the flocculated bacteria depends on the sludge age, i.e., the length of time the sludge is retained in the process. Absorption efficiency will increase with the active portion. Because of the short retention periods in this process, a maximum activity sludge is obtained, thereby generating maximized absorption.

In accordance with the process of the present 0180197
invention, there is established a recycle circuit for
the activated sludge including in sequence a biosorption
contactor, a solid/liquid separator, and a regenerator.
Clarified high BOD wastewater is introduced into the
contactor. There is concurrently introduced into the
contactor activated sludge recycled from the sludge regenerator. The sludge introduction is at a controlled
rate to provide high efficiency absorption of the
soluble BOD. Under equilibrium conditions using fully
regenerated sludge, a desirable weight ratio is from
5 to 15 parts of sludge per part of soluble BOD. With
these ratios, the contacting of the sludge with the
wastewater is effective to rapidly remove a major portion
of the soluble BOD from the wastewater. This removal
is accomplished without metabolism of most of the absorbed
soluble BOD. Only a relatively short contact time is
required. For example, average residence times of
the wastewater and sludge in the contactor may be within
the range from 5 to 40 minutes. Residence times of 5 to
20 minutes will usually be sufficient for efficient absorption. Longer holding times than 40 minutes do not
increase BOD absorption. It is not necessary to carry out
metabolism reactions in the contactor but only BOD absorption which occurs rapidly.

After the rapid initial contacting, the mixture
of sludge and wastewater is removed from the contactor
and passed to a solids/liquids separator. While a conventional gravity separator may be used, a preferred embodiment employs a dissolved air flotation (DAF) separator.
This type of separator utilizes water injection containing dissolved air under pressure. The release of the pressurized air.lifts the solids to the top of the separator where
they can be removed.

The bacterial sludge obtained from the separator
will contain the absorbed but unmetabolized organic material.
Because of the separation of the wastewater, the volumes
to be handled for oxidation of the organic material is
greatly reduced. The separated wastewater will have a
greatly reduced content of soluble BOD. The particulate
insoluble BOD, when present, will also be largely removed.
Under readily obtainable process conditions, the wastewater
by virtue of the biosorption contactor treatment alone will
have its content of soluble BOD reduced by at least 50%,
and reductions of up to at least 80% may be obtained under
optimized conditions. For example, the treated wastewater
may have a soluble BOD content in the range of 50 to 200
mg/l. Typically, the residual soluble BOD will be from
about 50 to 125 mg/l. Further treatment of the wastewater
may be required to achieve the low BOD levels required to
meet environmental standards. However, such further treatment
will have been greatly expedited by the prior high rate
BOD removal with the process of the present invention.
For example, the wastewater of reduced BOD content may
be treated in a standard activated sludge process plant.
Other alternative treatments can also be used, as is
known in the art.

The separated sludge is passed to the sludge
regenerator in which it is contacted with oxygen to
promote the metabolism of the removed BOD associated
with the sludge. This contacting is continued until
substantially all of the BOD has been metabolized and the BOD removal capacity of the sludge has been restored.
If the reaction time in the sludge regenerator is less than
that required to fully metabolize the BOD absorbed
in the contactor, the recycled sludge may reduce the efficiency
of the contactor. Optimally, therefore, the regeneration
time is approximately just sufficient for full restoration
of the absorption capacity of the sludge. Longer reaction
times in the regenerator can be used, but these may produce
undue biomass enlargement and require additional oxygen
consumption. However, the over-oxidized biomass is adapted
for use in the biosorption contactor since its absorption
capacity has been restored.

It will be understood that treatment times will
vary with the parameters of the particular system. Contactor
times may range from 5 to 30 minutes, such as typically from
10 to 25 minutes. The separator times will vary with the
type of separator unit. For a DAF separator, the flotation
separation of the sludge may be obtained with average
residence times of about 20 to 40 minutes. With a settling
tank-type separator, a residence time of several hours
(viz., 2 hours) may be needed. Reaction times in the sludge
regenerator may range from about 2 to 4 hours.

The relative size of the units of equipment will
also depend on the particular plant design. In general,
however, the sludge regenerator will have a sludge-containing
volume several times that of the wastewater containing
volume of the biosorption contactor. As required, the
contactor in the regenerator may be provided with agitation
or mixing means. Pressurized air may be introduced into
the bottom of the contactor as well as into the bottom
of the sludge regenerator. With proper arrangement of the air
inlets, pressurized air can provide the required agitation
within the contactor and the regenerator.

## Flow Sheet Example

Looking now at FIG. 1 of the drawing, there is shown a diagrammatic flow sheet representing an embodiment of the process of the present invention. Clarified high BOD wastewater is introduced into a biosorption contactor of relatively small volume. Pressurized air is introduced into a distributor in the bottom or the contactor, providing agitation as well as initial oxidizing contact of the wastewater and sludge. Regenerated activated sludge is recycled by means of a pump from the sludge regenerator to the biosorption contactor.

In the contactor, as described above, there is a rapid absorption of the soluble organic substances. Little metabolism of these absorbed organics occurs in the biosorption contactor, since residence times of as little as 15 to 25 minutes are employed. The mixture of the sludge containing the unmetabolized BOD and the wastewater is passed to a solids/liquids separator. In the embodiment shown, the separator is of the DAF type. Water contained air under pressure is introduced through a distributor into the bottom of the separator. The release of the pressurized air lifts the solids to the top of the separator, where the sludge is removed, and transferred by means of a pump to the sludge regenerator. Sludge not required for the recycle operation can be removed with valve-equipped side drawoff stream, as shown.

Recirculated sludge is processed in the sludge regenerator, being continuously contacted therein by pressurized air which is introduced through a distributor in the bottom of the regenerator tank. The air can provide agitation even alone or together with a mechanical agitator. Oxidative metabolism of the absorbed BOD occurs in the sludge regenerator.

Preferably, as explained above, the treatment in the regenerator is continued until substantially all of the BOD absorbed in the contactor has been metabolized.  At this stage, the BOD

absorption capacity of the sludge has been restored, and the sludge is ready for return by a transfer pump to the

biosorption contactor.

## CLAIMS

I claim:

1. A continuous process for treatment of clarified high soluble BOD wastewater with an activated sludge consisting of microorganisms adapted for BOD reduction, comprising

(a) establishing a recycle circuit for the activated sludge including in sequence a biosorption contactor, a solids/liquid separator, and a sludge regenerator;

(b) introducing said clarified high BOD wastewater into said contactor and concurrently introducing activated sludge recycled from said sludge regenerator, said sludge introduction being controlled to provide a weight ratio of from 5 to 15 parts sludge per part soluble BOD, the contacting of said sludge and wastewater in said contactor being effective to remove a major portion of the soluble BOD from the wastewater without metabolism thereof by said sludge;

(c) removing a mixture of sludge and wastewater from said contactor and passing said mixture to said solids/liquid separator;

(d) separating the sludge from the wastewater in said separator and passing separated sludge containing the unmetabolized BOD to said regenerator; and

(e) contacting said sludge in said regeneration with oxygen to promote the metabolism of the removed BOD associated with said sludge, said contacting being continued until substantially all of said BOD has been metabolized and the BOD removal capacity of said sludge has been restored.

2. The process of claim 1 in which the average 0180197 residence time of said sludge and wastewater in said contactor is from 5 to 20 minutes.

3. The procession of claim 1 in which sa: solids/liquid separator is a dissolved air flotation separator.

4. The process of claim 1 in which said wastewater has an initial soluble BOD of at least 250 milligrams per liter and the wastewater discharged from said solids/liquid separator has soluble BOD at least 50% less than the initial BOD.

5. The process of claim 1 in which said regenerator has a sludge-containing volume several times that of the wastewater-containing volume of said contactor.

6. A continuous process for treatment of clarified wastewater containing in excess of 250 milligrams per liter of soluble BOD, comprising

(a) establishing a recycle circuit for activated sludge including in sequence a biosorption contactor, a solids/liquid separator, and a sludge regenerator, said activated sludge being adapted for BOD reduction;

(b) introducing said clarified high BOD wastewater into said contactor and concurrently introducing activated sludge recycled from said sludge regenerator, said sludge introduction being controlled to provide a weight ratio of from 5 to 15 parts sludge per part soluble BOD, the contacting of said sludge and wastewater in said contactor being effective to remove a major portion of the soluble BOD from the wastewater without metabolism thereof by said sludge;

(c) removing a mixture of sludge and wastewater from said contactor and passing said mixture to said solids/liquid separator; and

(d) separating the sludge from the wastewater in said separator and passing separated sludge containing the unmetabolized BOD to said regenerator, the wastewater removed from said separator having soluble BOD at least 50% less than its initial soluble BOD.

7. The process of claim 6 in which the average residence time of said sludge and wastewater in said contactor is from 5 to 20 minutes.

8. The process of claim 6 in which said solids/liquid separator is a dissolved air flotation separator.

9. The process of claim 6 in which said regenerator has a sludge-containing volume several times that of the wastewater-containing volume of said contactor.

10. A continuous process for treatment of clarified wastewater containing in excess of 250 milligrams soluble BOD per liter and being substantially free of particulate solids, comprising

(a) establishing a recycle circuit for activated sludge including in sequence a biosorption contactor, a solids/liquid separator, and a sludge regenerator, said sludge being adapted for BOD reduction, said regenerator having a fluid-containing volume several times that of the wastewater-containing volume of said contactor.

(b) introducing said clarified high BOD wastewater into said contactor and concurrently introducing activated sludge recycled from said sludge regenerator, said sludge introduction being controlled to provide a weight ratio of from 5 to 15 parts sludge per part soluble BOD, the contacting of said sludge and wastewater in said contactor being effective to remove a major portion of the soluble BOD from the wastewater without metabolism thereof by said sludge, the average residence time of said sludge in wastewater in said contactor being from about 5 to 20 minutes;

(c)   removing a mixture of sludge and wastewater from said contactor and passing said mixture to said solids/liquid separator, said separator being a dissolved air flotation separator;

(d)   separating the sludge from the wastewater in said separator and passing separated sludge containing the unmetabolized BOD to said regenerator, the wastewater removed from said separator having a soluble BOD content at least 50% less than its initial BOD; and

(e)   contacting said sludge in said regenerator with oxygen to promote the metabolism of the removed BOD associated with said sludge, said contacting being continued until substantially all of said BOD has been metabolized and the BOD removal capacity of said sludge has been restored.

FIG. 1